# FASCICULE DE BREVET EUROPEEN

(11) **EP 2 912 241 B1**
(45) Date de publication et mention de la délivrance du brevet: **16.03.2016**
(21) Numéro de dépôt: 13794825.3
(22) Date de dépôt: 23.10.2013
(51) Int. Cl.: E04H 4/10, A01G 9/22, A63C 19/12, B60J 7/08, B61D 39/00

(54) **DISPOSITIF DE COUVERTURE D'UNE SURFACE COMPRENANT DES BOURRELETS DE FIXATION LE LONG DES BORDS DE LA COUVERTURE**
VORRICHTUNG ZUR VERKLEIDUNG EINER OBERFLÄCHE MIT BEFESTIGUNGSROLLEN ENTLANG DER KANTEN DER ABDECKUNG
DEVICE FOR COVERING A SURFACE, COMPRISING ATTACHMENT ROLLS ALONG THE EDGES OF THE COVER

(30) Priorité: 24.10.2012 BE 201200725
(43) Date de publication de la demande: 02.09.2015
(73) Titulaire: Becoflex S.A., 1440 Wauthier-Braine (BE)
(72) Inventeur: COENRAETS, Benoit, B-1440 Wauthier-Braine (BE)
(74) Mandataire: Connor, Marco Tom
(86) Numéro de dépôt international: PCT/EP2013/072139
(87) Numéro de publication internationale: WO 2014/064138

(56) Documents cités:
- WO-A1-2010/054960
- US-A1- 2003 097 709
- US-A1- 2003 173 795

## Description

### DOMAINE DE L'INVENTION

L'invention se rapporte à un dispositif de couverture d'une surface, aisé à mettre en oeuvre et répondant au mieux aux exigences de l'application concernée. En particulier, la présente invention concerne un dispositif de couverture dans lequel la couverture comprend un bourrelets de fixation particulier permettant l'ancrage réversible des bords longitudinaux de la couverture lors de son déploiement.

### ARRIÈRE-PLAN TECHNOLOGIQUE

On applique des couvertures sur des surfaces pour des raisons qui dépendent de la nature de ces surfaces. Ainsi, dans le cas d'un bassin tel qu'une piscine la couverture peut éviter la pollution par des feuilles ou des animaux, peut faire économiser de l'énergie, de l'eau et des réactifs et peut ou doit assurer la sécurité des personnes en particulier des enfants. Dans un bassin de dessalement ou d'autres traitements d'un fluide, une couverture permet d'éviter la dilution de liquide due à la pluie ou l'évaporation excessive due à la chaleur.

Lorsqu'il s'agit d'un terrain de sport tel qu'un terrain de tennis externe en terre battue ou gazon, une couverture permet de le protéger contre les intempéries, et en particulier une pluie intermittente. Par ailleurs, une caisse de véhicule est couverte notamment pour assurer la stabilité de la charge à la dépression causée par le déplacement du véhicule et la protéger contre les intempéries. On utilise également des couvertures en tant que stores pour serres, jardins d'hiver ou fenêtres de véhicules afin d'éviter toute surchauffe à l'intérieur, et en tant que protection solaire pour auvents de terrasse.

Dans tous les cas de figure, on recherche généralement un dispositif de couverture économique permettant une mise à couvert et à découvert aisée, sûre, reproductible et rapide, nécessitant un minimum d'intervention humaine et, surtout, ayant une durée de vie aussi longue que possible. De nombreux dispositifs de recouvrement d'une surface ont été développés, allant des modèles basiques aux plus sophistiqués, Par exemple, un premier dispositif tout à fait basique utilisé dans le cas d'une piscine comprend une couverture gonflable ou non que l'on déroule, étend et fixe manuellement sur les bords de la piscine. Ce type de dispositif est illustré par exemple dans les documents US6691334, GB2379163 et FR2652373. Il est clair qu'ici compte tenu de la manutention et du stockage, seules des piscines d'assez petite taille sont concernées.

Pour des surfaces de plus grandes dimensions on peut recourir à des dispositifs de couverture présentant en outre un tambour fixé à l'une des extrémités transversales de la surface à protéger. La couverture est déployée manuellement par traction, en se déroulant du tambour, pour couvrir la surface. Le poids et les dimensions de la couverture nécessitent l'intervention de plusieurs personnes afin qu'elle se mette en place convenablement. On effectue le retrait de la couverture en l'enroulant autour du tambour par rotation : la couverture se retire alors de la surface en glissant sur celle-ci. La rotation du tambour pour retirer la couverture est réalisée manuellement ou au moyen d'un moteur électrique ayant la puissance suffisante pour tirer la couverture complètement déployée. Il faut souligner qu'un déploiement aisé de la couverture, en particulier dans le cas d'une piscine, contribue à sa sécurité, car une manipulation pénible entraverait son utilisation. Le déploiement (c'est-à-dire son déroulement du tambour) et le retrait (c'est-à-dire son ré-enroulement sur le tambour) de la couverture peut se faire manuellement ou automatiquement à l'aide d'un moteur. Des dispositifs de couverture automatiques sont illustrés notamment dans les documents suivants : US3574979, GB2199741, US2005/0097834, CA2115113, US2001/0023506, US5930848, US4001900 et sur le site www.aquatop.be.. Mais ce type de dispositifs de couverture à tambour fixe évoqués ci-dessus ont pour inconvénient majeur de faire glisser la couverture qui est traînée sur la surface à protéger lors de son déploiement et de son retrait ce qui engendre son usure prématurée ainsi qu'un travail supérieur dû aux frottements ainsi générés.

Dans la présente demande, les termes « longitudinal » « transversal » et leurs dérivés se réfèrent respectivement à la direction de déplacement du tambour et à la direction de l'axe de révolution de celui-ci.

Afin de pallier à l'inconvénient des dispositifs à tambour fixe, un nouveau type de dispositif de couverture à tambour a été développé, dans lequel le tambour motorisé est monté sur un mécanisme de translation longitudinale. Celui-ci déplace le tambour au-dessus de la surface à couvrir ce qui permet littéralement de « poser » la couverture sur la surface, lors de son déploiement, en la déroulant simultanément du tambour pendant son déplacement longitudinal, puis de la soulever, lors de son retrait, en l'enroulant simultanément sur le tambour. La couverture ne glisse donc pas sur la surface ni lors de son déploiement ni lors de son retrait. Le dispositif de couverture comprend également un système de fixation de la couverture à une extrémité transversale de la surface à couvrir de sorte que la translation et la rotation du tambour entraînent le déroulement ou l'enroulement de la couverture au-dessus de la surface à couvrir.Des exemples de dispositifs automatiques de ce type sont divulgués par exemple dans les documents suivants: WO2005/026473, FR2900951, DE2257231, FR2893651, FR2789425, FR2743502, EP1719858, et sur le site www.kimbay.fr. Par ailleurs, une variante complètement manuelle du tambour monté à translation longitudinale est illustrée dans les documents WO2007/036625 et US4195370.

Les dispositifs de couverture à tambour mobile illustrés ci-dessus prévoient seulement une fixation d'un bord transversal de la couverture à une extrémité transversale de la surface à couvrir, le bord opposé restant solidaire du tambour. Aucun système de fixation des bords longitudinaux de la couverture n'est prévu. En particulier dans le cas d'une piscine, des personnes s'engageant sur la couverture ne seraient pas retenues par ses bords longitudinaux et pourraient ainsi être précipitées dans l'eau. En outre, le manque d'étanchéité de la couverture sur ses bords longitudinaux peut favoriser l'introduction dans la piscine de saletés, feuilles mortes et brindilles ainsi que de petits animaux tels que des souris ou des serpents. Des dispositifs plus sophistiques ont été proposés permettant de fixer de manière réversible les bords longitudinaux de la couverture lors de son déploiement, tel que dans le document FR2803769 qui prévoit un système de fixation des bords longitudinaux de la couverture constitué de tronçons de grilles se soulevant puis se rabattant tronçon par tronçon sur lesdits bords longitudinaux de la couverture en maintenant ces bords à l'intérieur d'un caniveau au fur à mesure du déroulement de celle-ci. Dans cette conception, les bords longitudinaux de la couverture sont pincés sans être verrouillés, ce qui procure une moindre sécurité en particulier dans le cas de piscines.

Un autre système avantageux permettant simultanément de fixer les bords longitudinaux de la couverture lors de son déploiement et d'exercer une force de traction transversale sur celle-ci pour la tendre parfaitement a été divulgué dans WO2010/010152 et dans WO2010/054960. Dans ces dispositifs, les bords longitudinaux de la couverture sont munis d'un jonc ou bourrelet qui est introduit dans l'ouverture orientée vers le haut d'un rail en forme de profilé de section en « U », avec une ou deux ailettes refermant partiellement ladite ouverture. Le bourrelet venant se glisser sous une ailette et retenue dans cette position par des moyens de fixations adéquats, permet de fixer solidement les bords longitudinaux de la couverture..

Un tel jonc, ou bourrelet est avantageusement constitué d'une tresse formant le coeur du bourrelet, enveloppée dans un tissu, généralement tissé ou tressé, dont les bords libres sont fixés sur l'une au moins des deux faces de la couverture le long de ses bords longitudinaux avec une colle, par soudure ponctuelle ou, plus avantageusement par couture. Un exemple de tel bourrelet est représenté à la Figure 2. US2003/0097709 décrit un jonc de ce genre, dans lequel un bourrelet est formé par un coeur sensiblement cylindrique enveloppé dans une bande de tissu dont les bords libres sont fixés à une couverture comprenant un revêtement en vinyl par soudage à air chaud. Le soudage est effectué à l'aide de canons à air chaud orientés vers l'interface des bandes libres du tissu enveloppeur et les deux surfaces de la couverture directement en aval de deux rouleaux presseurs appliquant une pression sur les bandes et la couvertures ainsi chauffées. A la Figure 13 de US2013/0097709 on voit clairement que la soudure s'étend exclusivement aux bandes libres du tissu enveloppeur alors que le coeur et la partie du tissu en contact direct avec le coeur ne sont pas visés par les canons à air et ne sont pas compressés par les rouleaux presseurs.

Cette solution est satisfaisante, mais après un certain temps d'utilisation, on observe un froncement des bords longitudinaux de la couverture, qui a l'inconvénient de donner plus de volume à la couverture enroulée sur le tambour et surtout, l'inconvénient majeur d'empêcher le bon engagement du bourrelet dans l'ouverture du rail. Le document WO 2010/054960 divulgue un dispositif de couverture ayant les caracteristiques du préambule de la revendication 1.

La présente invention propose une forme de bourrelet s'étendant le long des bords longitudinaux de la couverture d'un dispositif à tambour mobile, qui a une meilleure stabilité mécanique dans le temps que les solutions proposées à ce jour.

### RÉSUMÉ DE L'INVENTION

L'invention est telle que définie dans la revendication 1 et des variantes préférées sont définies dans les revendications dépendantes.

Dans une forme préférée de l'invention, le coeur est formé
(a) par une tresse de fibres synthétiques ou naturelles, telles que des fibres en polyoléfine (par exemple Dyneema®), polyester, polyamide, polyaramide, PVC, coton, lin, chanvre, jute, ramie, sisal, raphia, ou
(b) par un profilé en matière élastomère, telle que caoutchouc naturel ou synthétique (polyisoprène), polybutadiène, PVC, ou copolymère styrène-butadiène.

:Le fourreau tubulaire et la bande peuvent être formés par un film en matière polymérique, mais ils sont de préférence formés par un tissu, préférablement un tissé, de fibres synthétiques ou naturelles, telles que des fibres en polyoléfine (par exemple Dyneema®), polyester, polyamide, polyaramide, coton, lin, chanvre, jute, ramie, sisal, raphia. Dans une variante préférée de l'invention, la bande et le fourreau tubulaire sont tissés ou tressés intégralement l'un avec l'autre.

Le coeur peut être fixé au fourreau tubulaire selon l'invention, par exemple par :
(a) Au moins une couture le long du bourrelet et traversant de part et d'autre le coeur,
(b) un collage ponctuel le long du bourrelet, ou
(c) un soudage ponctuel le long du bourrelet, par exemple par ultrason, ou application localisée d'une source de chaleur.

La bande peut elle être fixée à une face au moins de la couverture par :
(a) Au moins une couture le long d'un bord longitudinal de la couverture,
(b) un collage ponctuel ou continu le long d'une face au moins de la couverture, ou
(c) un soudage ponctuel ou continu le long d'une face au moins de la couverture, par exemple par ultrason, ou application localisée d'une source de chaleur.

Le mécanisme de translation longitudinale comprend de préférence un chariot monté sur les rails. Les moyens d'engagement du système de verrouillage continu comprennent de préférence des moyens d'application à la couverture d'une contrainte en traction dans la direction transversale lors de son déroulement, ladite contrainte étant maintenue lors du verrouillage de la couverture dans l'au moins un desdits rails. En particulier, les moyens d'application d'une contrainte transversale peuvent comprendre un palier de renvoi sensiblement cylindrique monté à rotation selon un axe parallèle à la direction transverse de la couverture. Ce palier de renvoi a une extrémité distale, éloignée de la surface à couvrir, et une extrémité proximale adjacente à ladite surface. La couverture enveloppe partiellement ledit palier de renvoi afin de changer d'orientation, de sorte que le bourrelet dépasse outre l'extrémité distale du palier et maintienne ainsi la tension transversale lors de l'engagement du bourrelet dans le rail. Les moyens d'application d'une contrainte transversale peuvent de plus comprendre deux paliers tenseurs positionnés entre le tambour et le palier de renvoi, les deux paliers tenseurs étant séparés d'une distance supérieure ou égale à l'épaisseur de la couverture et inférieure à l'épaisseur du bourrelet, afin d'appliquer une tension transversale à la couverture et de guider le bourrelet outre l'extrémité distale du palier de renvoi.

Dans une variante préférée de l'invention, le chariot surplombant transversalement la surface à couvrir et supportant le tambour comprend à chacune de ses extrémités:
(a) une roue d'entraînement dont l'axe de rotation est parallèle, de préférence co-axial, à celui dudit tambour ;
(b) au moins deux roulettes reposant sur les rails et permettant la translation longitudinale du chariot et étant montées de part et d'autre de la roue d'entraînement et constituant avec celle-ci un triangle dont la roue d'entraînement forme le sommet supérieur (càd. Hors du plan de la surface à couvrir); et
   le mécanisme de translation comprend deux courroies flexibles fixées uniquement à chacune de leurs extrémités aux quatre coins de la surface à couvrir, chacune des deux courroies:
(c) étant disposée dans l'ouverture des rails dans les sections latérales comprises entre un point de fixation et la roulette la plus proche dudit point de fixation, et
(d) coiffant sans glissement la roue d'entraînement dans la section centrale comprise entre les deux roulettes.

Un tel mécanisme permet :
(a) lors du déroulement de la couverture (= déploiement de la couverture) d'insérer le bourrelet de chaque bord longitudinal de la couverture dans l'ouverture du rail correspondant au fur et à mesure que le chariot avance et de l'y bloquer par l'insertion immédiatement après dans la même ouverture de la section latérale de courroie directement adjacente à la roulette en aval du sens de translation du chariot.et
(b) lors du ré-enroulement de la couverture (= retrait de la couverture), de retirer de ladite ouverture du rail la section centrale de courroie directement adjacente à la roulette en amont du sens de translation du chariot, permettant ainsi au bourrelet de se dégager du rail et rendant possible le réenroulement de la couverture sur le tambour du chariot.

Le dispositif de couverture comprend de préférence des moyens de modification de la vitesse relative de rotation entre le tambour d'enroulement/déroulement de la couverture et l'axe de rotation des roues d'entraînement. En particulier, de tels moyens peuvent inclure un ressort spiralé placé à l'intérieur du tambour et permettant de compenser la différence entre la vitesse de rotation des roues d'entraînement, qui doit rester sensiblement constante, et la vitesse de rotation du tambour, qui varie avec le diamètre extérieur du tambour au fur et à mesure que la couverture est enroulée/déroulée. Si le ressort spiralé est tendu lors du déroulement de la couverture, cela a l'avantage que, lors du réenroulement de la couverture, il n'est pas nécessaire de motoriser la rotation du tambour pour ramasser la couverture.

Le dispositif de la présente invention est particulièrement adapté pour recouvrir des surfaces telles que:
(a) un bassin rempli ou non d'un liquide tel qu'une piscine, un bassin de rétention, de traitement ou de désalinisation des eaux ;
(b) un terrain de sports, tel un terrain de tennis ou de cricket ;
(c) une caisse de véhicule,
(d) une surface vitrée telle une serre, un jardin d'hiver ou une fenêtre de véhicule.

### BRÈVE DESCRIPTION DES FIGURES

Ces aspects ainsi que d'autres aspects de l'invention seront clarifiés dans la description détaillée de modes de réalisation particuliers de l'invention, référence étant faite aux dessins des figures, dans lesquelles :
Fig.1 est une vue d'ensemble en perspective d'une surface avec le tambour en position telle qu'une partie de la surface seulement est recouverte par une couverture.
Fig.2 est une vue d'un bourelet selon l'invention
Fig.3 montre deux bourrelets en coupe : (a), (b) selon l'art antérieur et (c)-(e) selon l'invention ;
Fig.4 ; illustre un mécanisme de fixation d'un bourrelet dans l'ouverture d'un rail par l'intermédiaire d'une courroie flexible.
Fig.5 montre un détail d'un moyen d'application sur la couverture d'une contrainte transversale comprenant deux paliers tenseurs et un palier de renvoi.

### DESCRIPTION DÉTAILLÉE DE MODES DE RÉALISATION PARTICULIERS

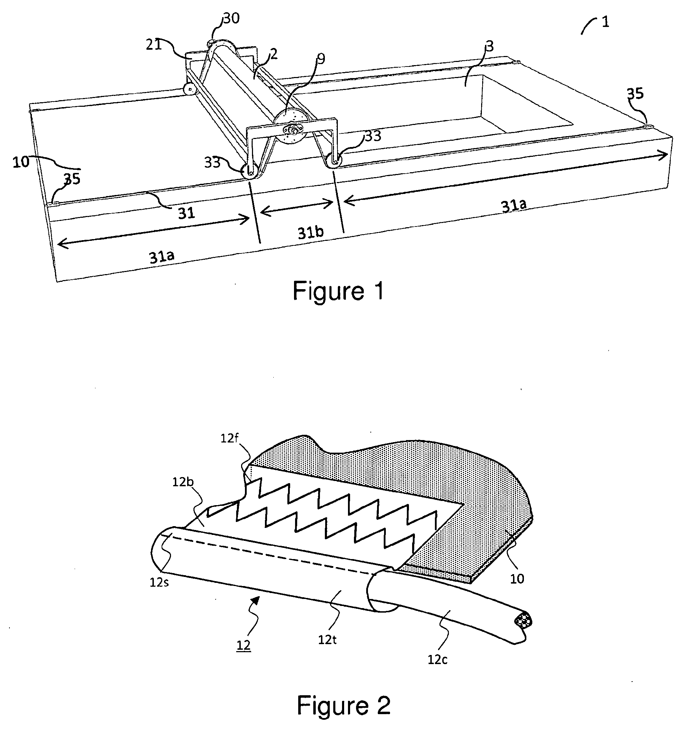

Tel que représenté à la Fig. 1, le dispositif automatique de couverture (1) d'une surface (3) selon l'invention comprend une couverture (10) destinée à protéger ladite surface (3). Le dispositif (1) permet de couvrir notamment des surfaces définies par le contour d'un bassin d'eau tel qu'une piscine, bassin de traitement d'eau, station d'épuration d'eaux usées, bassin de rétention, station de désalinisation etc. Cependant, l'invention pourra être mise en oeuvre dans tout domaine nécessitant la couverture d'une surface, comme par exemple un terrain de tennis en terre battue ou en gazon, une caisse de véhicule, une surface vitrée de serre, de fenêtre de véhicule tel que train ou bus, ou de jardin d'hiver, etc. D'une manière générale, on entend donc dans la présente demande par « surface » toute zone délimitée par un périmètre.

Le dispositif (1) comprend un tambour (2) qui présente une longueur au moins égale à la largeur de la couverture (10), celle-ci devant être de largeur et de longueur suffisantes pour couvrir toute la surface à protéger (3) lorsqu'elle est déployée. Le tambour (2) est monté sur un mécanisme de translation longitudinale comprenant des rails (6) placés de part et d'autre de ladite surface (3). Le tambour (2) a deux sens de rotation : le premier sens de rotation lui permettant de dérouler la couverture (10) pour la déployer et couvrir la surface à protéger (3), et le second sens de rotation lui permettant d'enrouler la couverture (10) afin de la retirer et de donner accès à ladite surface (3).

Le dispositif (1) comprend en outre un système de fixation situé à une extrémité transversale de la surface à couvrir et permettant le déroulement/enroulement de la couverture au-dessus de la surface à couvrir (3) lors de la translation et la rotation du tambour (2). Tout type de système de fixation connu et convenant aux critères de contraintes et de sécurité selon l'application peut être utilisé à cet effet. Par exemple, le système de fixation peut comprendre une pluralité de sangles solidaires de l'extrémité transversale apparente de la couverture (10), lesdites sangles étant par exemple munies de crochets d'ancrage qui se fixent sur la partie transversale du contour délimitant la surface à couvrir (3). De manière alternative, on peut munir l'extrémité à fixer de la couverture d'oeillets qui viennent se fixer au bord transversal de la surface par l'intermédiaire d'une série de pitons, de vis, d'un câble ou tout autre moyen. Ces moyens d'ancrage maintiennent immobilisée l'extrémité transversale apparente de la couverture (10) ce qui permet de générer sur celle-ci une traction longitudinale et de la dérouler sans devoir motoriser la rotation du tambour (2) lorsqu'il se déplace pour couvrir la surface (3).

La couverture peut être en toute matière convenant à l'application en question : matériaux textiles synthétiques ou naturels, films polymériques, lattes en polymère, en métal ou en bois, etc. Elle peut être transparente, opaque ou translucide et peut former une barrière à des fluides ou au contraire être poreuse, voir même comprendre des mailles telles que dans un filet. Par exemple, pour des applications de piscines ou de bassins de traitement d'eau ou similaire, il est avantageux si la couverture comprend des trous de drainage permettant ainsi à l'eau de pluie de ne pas s'accumuler sur la couverture et évitant ainsi la formation de poches d'eau sur la surface de la couverture.

Comme illustré à la Figure 2, le bourrelet placé le long des deux bords longitudinaux de la couverture est formé par un coeur (12c) de géométrie sensiblement prismatique, de préférence sensiblement cylindrique. Le coeur (12c) est enveloppé dans un fourreau tubulaire (12t) muni sur tout son long d'une bande (12b) fixée à au moins une face de la couverture.

Une tension longitudinale peut être appliquée à la couverture lors de son déploiement simplement en s'assurant que la vitesse de déroulement de la couverture par la rotation du tambour soit inférieure à la vitesse de translation longitudinale du tambour, soit par l'intermédiaire d'un frein ou d'un ressort dans le système de rotation du tambour, soit par un contrôle motorisé différencié des mouvements de rotation et translation du tambour. Si ces deux vitesses sont synchrones, la couverture sera déployée sans d'autres tensions que celles générées par son poids propre dans le cas de la couverture d'une surface comprenant une cavité telle qu'une piscine.

Le dispositif (1) objet de l'invention comprend un système de verrouillage continu des bords longitudinaux de la couverture (10) dans les rails (6) s'enclenchant au fur et à mesure de son déroulement et se déclenchant lors de son enroulement. De tels systèmes de verrouillage sont décrits par exemple dans WO2010010152 et WO2010054960, dont le contenu est inclus dans la présente demande par référence. Un système de verrouillage auquel s'applique la présente invention comprend :
(a) deux rails (6) s'étendent le long des cotés longitudinaux et de part et d'autre de la surface à couvrir. Les rails sont constitués d'un profilé ayant une ouverture (14) vers l'extérieur, (i.e., orientée à l'opposé de la surface à couvrir) sur une de ses faces et comprenant une ou deux ailes fermant partiellement de part et d'autre ladite ouverture (14) (s'il n'y a qu'une aile (6a) elle est située du côté adjacent à la surface à couvrir) ;
(b) les bords longitudinaux de la couverture (10) comprennent chacun au moins un bourrelet (12) formé par un coeur (12c) de géométrie sensiblement prismatique, de préférence sensiblement cylindrique, contenu dans un fourreau tubulaire (12t) muni sur tout son long d'une bande (12b) fixée à au moins une face de la couverture (voir Figure 2) ;
(c) des moyens d'engagement (13, 15a, 15b) permettant d'engager ledit bourrelet (12) dans l'ouverture (14) formée par la ou les ailes (6a) du rail (6) et de le glisser sous une des ailes et des moyens de fixation (31) pour empêcher que le bourrelet puisse sortir de ladite ouverture (14), de sorte que la couverture (10) soit verrouillée au rail (6).

Un tel système de verrouillage permet de glisser le bourrelet (12) dans l'ouverture (14) du rail (6) et de l'y coincer entraînant ainsi la fixation continue dans ledit rail (6) du bord longitudinal correspondant de la couverture (10) et de maintenir par celui-ci la couverture (10) au-dessus de la surface à couvrir (3) même en cas de sollicitations mécaniques très élevées dues par exemple à une dépression ou à la gravitation. Dans le cas des piscines, il confère la sécurité en cas d'accès (autorisé ou non) sur la couverture. La résistance du système de verrouillage peut facilement atteindre une plage de 5 à 10 kN/m (500 à 1000 kg/m) qui est suffisante pour de nombreuses applications. Selon les matériaux utilisés, de plus hautes résistances de verrouillage peuvent être atteintes.

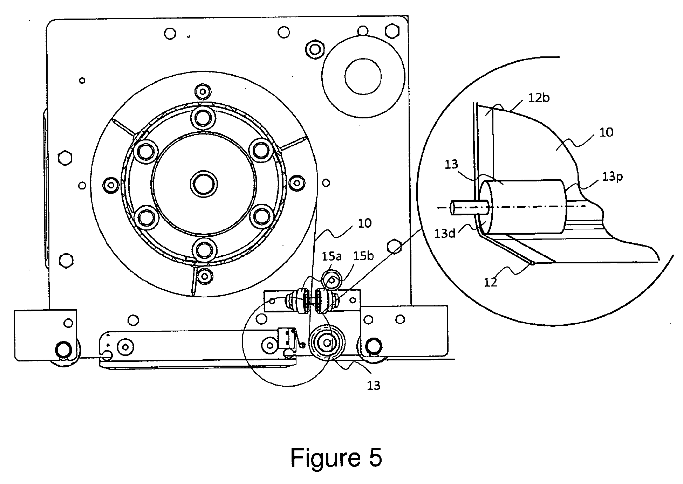

Dans une forme préférée, le système de verrouillage du dispositif de couverture (1) comprend des moyens d'application d'une tension transversale à la couverture, qui guident aussi le bourrelet vers l'ouverture du rail correspondant. Tel que représenté à la Figure 5, de tels moyens comprennent de préférence deux paliers tenseurs (15a, 15b) séparés l'un de l'autre d'une distance supérieure à l'épaisseur de la couverture et inférieure à l'épaisseur du bourrelet (12), afin d'appliquer une tension transversale à la couverture. Les moyens comprennent également de préférence au moins un palier de renvoi (13) sensiblement cylindrique monté à rotation selon un axe parallèle à la direction transverse de la couverture, ledit palier de renvoi ayant une extrémité distale (13d), éloignée de la surface à couvrir, et une extrémité proximale (13p), adjacente à ladite surface, la couverture enveloppant partiellement ledit palier (13) afin de changer d'orientation, de sorte que le bourrelet (12) dépasse outre l'extrémité distale (13d) du palier. Si le système comprend deux paliers tenseurs (15a, 15b), ceux-ci sont placés entre le palier de renvoi (13) et le tambour, afin de positionner le bourrelet de la couverture lorsqu'il atteint le palier de renvoi (13) outre son bord distal (13d).

De manière générale, il est préférable que le mécanisme de translation longitudinale comprenne un chariot (21) monté sur les rails (6) et supportant le tambour.. Dans une variante particulièrement préférée de la présente invention, le système de translation et de verrouillage sont tels que décrits dans WO2010054960 et représenté à la Figure 1, et comprend un chariot (21) monté sur les rails (6) et surplombant transversalement la surface (3) à couvrir et supportant le tambour (2). Ledit chariot comprend à chacune de ses extrémités:
(a) une roue d'entraînement (9) dont l'axe de rotation est parallèle à celui dudit tambour (2); les deux roues d'entraînement (9) sont de préférence motorisées ;
(b) au moins deux roulettes (33) reposant sur les rails (6) et permettant la translation longitudinale du chariot (21), et étant montées de part et d'autre de la roue d'entraînement (9), et constituant avec celle-ci un triangle dont la roue d'entraînement (9) forme le sommet supérieur; et

le mécanisme de translation et fixation comprend deux courroies flexibles (31) fixées uniquement à chacune de leurs extrémités (35) aux quatre coins de la surface à couvrir, chacune des deux courroies (31)::
(c) étant disposée dans l'ouverture (14) des rails (6) dans les sections latérales (31a) comprises entre un point de fixation (35) et la roulette (33) la plus proche dudit point de fixation, et
(d) coiffant sans glissement la roue d'entraînement (9) dans la section centrale (31b) comprise entre les deux roulettes (33).

Un tel système est très avantageux car il remplit de multiples fonctions. Il permet tout d'abord de déplacer le chariot le long des rails. Comme le segment angulaire de la roue d'entraînement (9) coiffé par une courroie flexible (31) telle que décrite ci-dessus est bien supérieur à celui couvert par une crémaillère droite, par exemple posée au fond du rail, les risques de glissement d'une roue d'entraînement sont considérablement réduits. Un tel glissement d'une roue d'entraînement provoquerait la mise en travers du chariot et le blocage du système. Un deuxième avantage d'un tel système est que entre le chariot et les coins (35) de la surface à couvrir, l'ouverture (14) est obturée par la courroie (31) qui est insérée dans le rail dans ses portions (31a). Ceci permet de diminuer l'entrée de corps étrangers dans les rails, tels poussières, graviers, brindilles, etc., et aussi d'éviter qu'une personne s'y coince un orteil, par exemple dans le cas d'une piscine. Enfin, et ceci concerne plus particulièrement la présente invention, les courroies permettent de fixer le bourrelet (12) sous l'aile (6a) d'un rail au fur et à mesure que le bourrelet est introduit sous l'aile (6A) du rail.

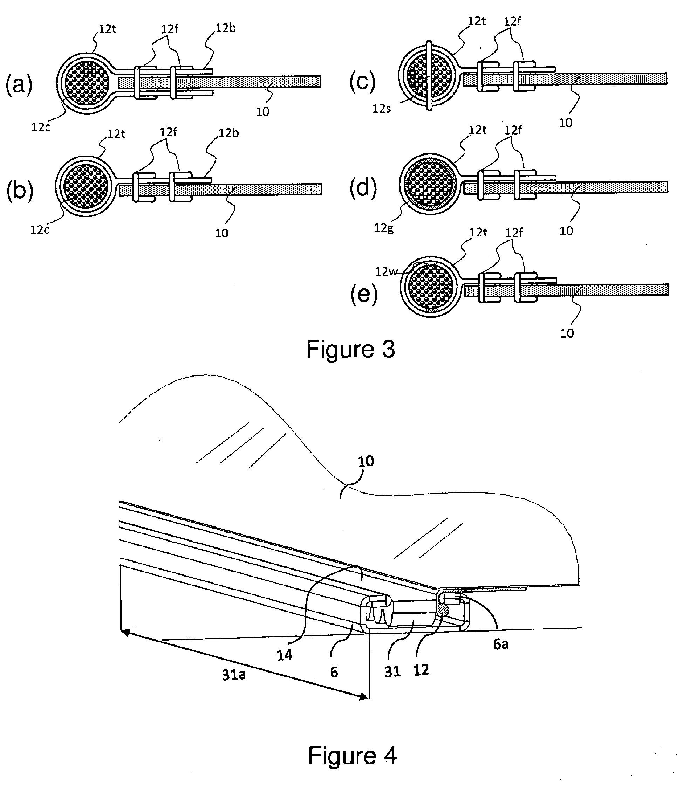

La Figure 4 illustre le système de fixation du bourrelet sous l'aile (6a) d'un rail. Comme discuté plus haut, le bourrelet (12) est guidé dans l'ouverture (14) du rail correspondant par des paliers tenseurs (15a, 15b) et de renvoi (13). Une fois dans l'ouverture (14), le bourrelet en ressortirait à la première sollicitation s'il n'y était pas fixé. L'introduction de la courroie (31) dans l'ouverture du rail directement après l'introduction du bourrelet (12) permet de fixer celui-ci sous l'aile (6a), empêchant ainsi qu'il n'en ressorte. Lorsque la couverture est retirée de la surface, la courroie est préalablement retirée, ce qui libère le bourrelet qui peut ressortir. En résumé, le système de fixation fonctionne comme suit :
(a) lors du déroulement de la couverture (= déploiement de la couverture), le bourrelet (12) de chaque bord longitudinal de la couverture est inséré dans l'ouverture (14) du rail (6) correspondant au fur et à mesure que le chariot avance et y est bloqué par l'insertion immédiatement après dans la même ouverture de la section latérale (31 a) de courroie directement adjacente à la roulette (33) en aval du sens de translation du chariot.et (b) lors du ré-enroulement de la couverture (= retrait de la couverture), la section centrale de courroie (31 b) directement adjacente à la roulette (33) en amont du sens de translation du chariot est retirée de ladite ouverture (14) du rail, permettant ainsi au bourrelet (12) de se dégager du rail et rendant possible le ré-enroulement de la couverture sur le tambour (2) du chariot.

Dans un système de couverture tel que décrit ci-dessus, les bourrelets des bords longitudinaux de la couverture sont soumis à de nombreuses sollicitations mécaniques en torsion, lorsque le bourrelet passe à travers les différents paliers, ce qui provoque des cisaillements importants entre le coeur (12c) et le fourreau tubulaire (12t) formant le bourrelet (12). Ces cisaillements provoquent un froncement du fourreau tubulaire (12t) qui peut, avec le temps, devenir important, tel qu'on rencontre dans le capuchon ou le bas d'un anorak, lorsqu'on tire sur les ficelles qui sont contenues dans un replis tubulaire de l'anorak. De tels froncements sur une couverture ont de multiples inconvénients. Tout d'abord, l'aspect esthétique de la couverture en est fortement dégradé, car des rides apparaissent sur les bords de la couverture, s'étendant vers le centre de celle-ci. Ensuite, les froncements du fourreau tubulaire (12t) augmente le diamètre des bords de la couverture qui est enroulée sur le tambour (2). Enfin, les froncements rendent plus difficile, voire dans les cas extrêmes, impossible d'insérer le bourrelet (12) dans l'ouverture (14) des rails (6). Pour toutes ces raisons, il est indispensable d'éviter la formation de froncements du fourreau tubulaire (12t).

Il a été découvert qu'il était possible d'éviter la formation de froncements du fourreau tubulaire (12t), en fixant le coeur (12c) du bourrelet au fourreau tubulaire (12t) de sorte à l'empêcher de glisser le long du fourreau lors des nombreuses contraintes auxquelles un bourrelet est soumis lors de déploiements et retraits successifs de la couverture. Il est indispensable, bien entendu, que la fixation du coeur au fourreau tubulaire maintienne une flexibilité du bourrelet suffisante pour les opérations de déroulement/enroulement de la couverture (10) au-dessus de la surface à couvrir (3).

En général, le coeur (12c) est formé
(a) par une tresse de fibres synthétiques ou naturelles, telles que des fibres en polyoléfine, polyester, polyamide, polyaramide coton, lin, chanvre, jute, ramie, sisal, raphia, ou
(b) par un profilé en matière élastomère, telle que caoutchouc naturel ou synthétique (polyisoprène), polybutadiène, PVC, ou copolymère styrène-butadiène.

Le fourreau tubulaire (12t) et bande (12b) quant à eux, sont généralement formés par un film en matière polymérique ou par un tissu, préférablement tissé ou tressé, de fibres synthétiques ou naturelles, telles que des fibres en polyoléfine, polyester, polyamide, polyaramide, PVC, coton, lin, chanvre, jute, ramie, sisal, raphia. Il est préféré que la bande (12b) et le fourreau tubulaire (12t) soient tissés ou tressés intégralement l'un avec l'autre.

Le coeur (12c) peut être fixé au fourreau tubulaire (12t) tout en maintenant une flexibilité suffisante du bourrelet (12) ainsi formé par :
(a) Au moins une couture (12s) le long du bourrelet et traversant de part et d'autre le coeur telle que représentéeà la Figure 3(c), ,
(b) un collage ponctuel (12g) le long du bourrelet, tel que représenté à la Figure 3(d), ou
(c) un soudage ponctuel (12w) le long du bourrelet, par exemple par ultrason, ou application localisée d'une source de chaleur tel que représenté à la Figure 3(e),

De préférence la fixation du coeur au fourreau se fait par une couture (12s) le long du bourrelet (voir Figure 3(c)).

De même, la bande (12b) peut être fixée à une face au moins de la couverture (10) par :
(a) Au moins une couture (12f) le long d'un bord longitudinal de la couverture,
(b) un collage ponctuel ou continu le long d'une face au moins de la couverture, ou
(c) un soudage ponctuel ou continu le long d'une face au moins de la couverture, par exemple par ultrason, ou application localisée d'une source de chaleur.

Comme illustré aux Figures 3(a)&(b), la bande peut être fixée à une face uniquement de la couverture (voir Figure 3(b) ou aux deux faces de celle-ci, prise en sandwich entre deux volets de la bande (12b) (voir Figure 3(a)). Dans une variante préférée de la présente invention, le fourreau tubulaire (12t) et la bande (12b) sont tissés ou tressés intégralement l'un avec l'autre et la bande n'est fixée qu'à une face de la couverture (10) tel que représenté dans les Figures 2(c)-(e).

Le déplacement du tambour le long d'une surface à couvrir ou découvrir se produit généralement à une vitesse constante. Les roues d'entraînement (9) doivent donc tourner à une vitesse de rotation sensiblement constante. Cependant, surtout pour des surfaces de dimensions longitudinales importantes, les diamètres extérieurs du tambour lorsque la couverture est déployée ou retirée peuvent varier considérablement. Comme la vitesse de déploiement/retrait de la couverture dépend de la vitesse de rotation des roues d'entraînement (qui demeure généralement constante) et comme le diamètre extérieur du.tambour varie avec la portion de couverture qui y est enroulée, il s'en suit que le tambour et les roues d'entraînement (9) ne peuvent tourner à la même vitesse. Pour des couvertures de petites dimensions, il est possible de compenser les différences de vitesse par une traction sur la couverture. Pour des couvertures de dimensions longitudinales plus importantes, comme pour une piscine ou une remorque d'un semi-remorque, il est nécessaire de prévoir des moyens de modification de la vitesse relative de rotation entre le tambour d'enroulement/déroulement de la couverture et l'axe de rotation des roues d'entraînement (9). Ces moyens peuvent inclure un ressort spiralé placé à l'intérieur du tambour (2) permettant de compenser la différence entre la vitesse de rotation des roues d'entraînement, qui doit rester sensiblement constante, et la vitesse de rotation du tambour, qui varie avec le diamètre extérieur du tambour au fur et à mesure que la couverture est enroulée/déroulée. Lors du déploiement de la couverture, le tambour tourne spontanément dû à la tension créée par la couverture qui est fixée à un bord latéral de la surface à couvrir. Si le ressort spiralé se tend pendant le déploiement de la couverture (10) sur la surface, il n'est pas nécessaire de motoriser la rotation du tambour non plus lors du ramassage et ré-enroulement de la couverture autour du tambour, dont la rotation est conduite par la détente du ressort spiralé. Ce système est très avantageux car il ne nécessite pas de deuxième moteur ou d'un système d'engrenages ou de contrôle électronique pour tourner le tambour à la vitesse adéquate.

Un système de couverture selon la présente invention est particulièrement adapté au recouvrement de surfaces telles que :
(a) un bassin rempli ou non d'un liquide tel qu'une piscine, un bassin de rétention, de traitement ou de désalinisation des eaux ;
(b) un terrain de sports, tel un terrain de tennis ou de cricket ;
(c) une caisse de véhicule, telle une remorque,
(d) une surface vitrée telle une serre, un jardin d'hiver ou une fenêtre de véhicule.

Avec un bourrelet (12) selon la présente invention, plus aucune formation de froncements du fourreau tubulaire n'a été observée suite à des séries de tests d'enroulements/déroulements répétés 10,000 fois sur une surface ayant des bords longitudinaux de 15 m de long, correspondant à la dimension d'un piscine. Avec les bourrelets antérieurs, dans lesquels le coeur (12c) n'est pas fixé dans le fourreau tubulaire (12t), des froncements de ce dernier apparaissaient après quelques dizaines de cycles seulement.

## Revendications

1. Dispositif (1) de couverture d'une surface (3) comprenant :
(a) Une couverture (10) sensiblement rectangulaire ayant deux bords longitudinaux opposés l'un à l'autre et deux bords transversaux opposés l'un à l'autre, chaque bord longitudinal étant muni d'un bourrelet (12) s'étendant le long dudit bord,
(b) un tambour (2) monté à rotation apte à enrouler ou dérouler la couverture (10), ledit tambour (2) étant monté sur un mécanisme de translation longitudinale comprenant des rails (6) placés de part et d'autre de ladite surface (3) et constitués chacun d'un profilé ayant une ouverture (14) sur une de ses faces et orientée à l'opposé de la surface à couvrir, ladite face comprenant au moins une aile (6a) située du côté adjacent à la surface à couvrir et fermant partiellement ladite ouverture (14) ;
(c) un système de fixation de ladite couverture (10) à une extrémité transversale de la surface (3) de sorte que la translation et la rotation du tambour (2) entraînent le déroulement/enroulement de la couverture (10) au-dessus de la surface à couvrir (3);
(d) un système de verrouillage continu du bourrelet (12) des bords longitudinaux de la couverture (10) dans l'ouverture (14) desdits rails (6) permettant au bourrelet (12) de s'enclencher sous l'aile (6a) au fur et à mesure du déroulement de la couverture (10) et de se désenclencher au fur et à mesure de son réenroulement,
**caractérisé en ce que** ledit bourrelet est formé par un coeur (12c) de géométrie sensiblement prismatique, de préférence sensiblement cylindrique contenu dans un fourreau tubulaire (12t) muni sur tout son long d'une bande (12b) fixée à au moins une face de la couverture, et le coeur (12c) du bourrelet est fixé au fourreau tubulaire (12t) de sorte à l'empêcher de glisser le long du fourreau, tout en maintenant une flexibilité du bourrelet suffisante pour les opérations de déroulement/enroulement de la couverture (10) au-dessus de la surface à couvrir (3).

2. Dispositif selon la revendication 1, dans lequel le coeur (12c) est formé
(a) par une tresse de fibres synthétiques ou naturelles, telles que des fibres en polyoléfine, polyester, polyamide, polyaramidecoton, lin, chanvre, jute, ramie, sisal, raphia, ou
(b) par un profilé en matière flexible, telle un élastomère, comme par exemple un caoutchouc naturel ou synthétique (polyisoprène), polybutadiène, PVC, ou copolymère styrène-butadiène.

3. Dispositif selon la revendication 1 ou 2, dans lequel le fourreau tubulaire (12t) et la bande (12b) sont formés par un film en matière polymérique ou par un tissu, préférablement tissé ou tressé, de fibres synthétiques ou naturelles, telles que des fibres en polyoléfine, polyester, polyamide, polyaramide, PVC, coton, lin, chanvre, jute, ramie, sisal, raphia et dans lequel la bande (12b) et le fourreau tubulaire (12t) sont de préférence tissés ou tressés intégralement l'un avec l'autre.

4. Dispositif de couverture selon l'une quelconque des revendications précédentes dans lequel le coeur (12c) est fixé au fourreau tubulaire (12t) par :
(a) Au moins une couture (12s) le long du bourrelet et traversant de part et d'autre le coeur,
(b) un collage ponctuel (12g) le long du bourrelet, ou
(c) un soudage ponctuel (12w) le long du bourrelet, par exemple par ultrason, ou application localisée d'une source de chaleur.

5. Dispositif de couverture selon l'une quelconque des revendications précédentes dans lequel la bande (12b) est fixée à une face au moins de la couverture (10) par :
(a) Au moins une couture (12f) le long d'un bord longitudinal de la couverture,
(b) un collage ponctuel ou continu le long d'une face au moins de la couverture, ou
(c) un soudage ponctuel ou continu le long d'une face au moins de la couverture, par exemple par ultrason, ou application localisée d'une source de chaleur.

6. Dispositif de couverture selon l'une quelconque des revendications précédentes où ledit mécanisme de translation longitudinale comprend un chariot (21) monté sur les rails (6).

7. Dispositif de couverture selon la revendication précédente dans lequel lesdits moyens d'engagement (15) du système de verrouillage continu comprennent des moyens d'application à la couverture (10) d'une contrainte en traction dans la direction transversale lors de son déroulement, ladite contrainte étant maintenue lors du verrouillage de la couverture (10) dans l'au moins un desdits rails (6).

8. Dispositif de couverture selon la revendication précédente dans lequel les moyens d'application d'une contrainte transversale comprennent un palier de renvoi (13) sensiblement cylindrique monté à rotation selon un axe parallèle à la direction transverse de la couverture, ledit palier de renvoi ayant une extrémité distale (13d), éloignée de la surface à couvrir, et une extrémité proximale (13p), adjacente à ladite surface, la couverture enveloppant partiellement ledit palier (13) afin de changer d'orientation, de sorte que le bourrelet (12) dépasse outre l'extrémité distale (13d) du palier.

9. Dispositif de couverture selon la revendication précédente dans lequel les moyens d'application d'une contrainte transversale comprennent de plus deux paliers tenseurs (15a, 15b) positionnés entre le tambour et le palier de renvoi (13), les deux paliers tenseurs étant séparés d'une distance supérieure ou égale à l'épaisseur de la couverture et inférieure à l'épaisseur du bourrelet (12), afin d'appliquer une tension transversale à la couverture et de guider le bourrelet (12) outre l'extrémité distale (13d) du palier de renvoi (13).

10. Dispositif de couverture selon l'une quelconque des revendications 7 à 10 dans lequel ledit chariot (21) surplombant transversalement la surface (3) à couvrir et supportant le tambour (2) comprend à chacune de ses extrémités:
(a) une roue d'entraînement (9) dont l'axe de rotation est parallèle à celui dudit tambour (2);
(b) au moins deux roulettes (33) reposant sur les rails (6) et permettant la translation longitudinale du chariot (21), et étant montées de part et d'autre de la roue d'entraînement (9), et constituant avec celle-ci un triangle dont la roue d'entraînement (9) forme le sommet; supérieur et dans lequel
le mécanisme de translation comprend deux courroies flexibles (31) fixées uniquement à chacune de leurs extrémités (35) aux quatre coins de la surface à couvrir, chacune des deux courroies (31)::
(c) étant disposée dans l'ouverture (14) des rails (6) dans les sections latérales (31a) comprises entre un point de fixation (35) et la roulette (33) la plus proche dudit point de fixation, et
(d) coiffant sans glissement la roue d'entraînement (9) dans la section centrale (31b) comprise entre les deux roulettes (33).

11. Dispositif de couverture selon la revendication précédente dans lequel :
(a) lors du déroulement de la couverture (= déploiement de la couverture), le bourrelet (12) de chaque bord longitudinal de la couverture est inséré dans l'ouverture (14) du rail (6) correspondant au fur et à mesure que le chariot avance et y est bloqué par l'insertion immédiatement après dans la même ouverture de la section latérale (31 a) de courroie directement adjacente à la roulette (33) en aval du sens de translation du chariot.et
(b) lors du ré-enroulement de la couverture (= retrait de la couverture), la section centrale de courroie (31 b) directement adjacente à la roulette (33) en amont du sens de translation du chariot est retirée de ladite ouverture (14) du rail, permettant ainsi au bourrelet (12) de se dégager du rail et rendant possible le ré-enroulement de la couverture sur le tambour (2) du chariot.

12. Dispositif selon la revendication 10 ou 11, comprenant des moyens de modification de la vitesse relative de rotation entre le tambour d'enroulement/déroulement de la couverture et l'axe de rotation des roues d'entraînement (9), lesdits moyens incluant un ressort spiralé placé à l'intérieur du tambour et permettant de compenser la différence entre la vitesse de rotation des roues d'entraînement, qui doit rester sensiblement constante, et la vitesse de rotation du tambour, qui varie avec le diamètre extérieur du tambour au fur et à mesure que la couverture est enroulée/déroulée.

13. Dispositif selon l'une quelconque des revendications précédentes dans lequel la surface à couvrir (3) est sélectionnée parmi :
(a) un bassin rempli ou non d'un liquide tel qu'une piscine, un bassin de rétention, de traitement ou de désalinisation des eaux ;
(b) un terrain de sports, tel un terrain de tennis ou de cricket ;
(c) une caisse de véhicule,
(d) une surface vitrée telle une serre, un jardin d'hiver ou une fenêtre de véhicule.

## Patentansprüche

1. Vorrichtung (1) zur Abdeckung einer Oberfläche (3), umfassend:
(a) eine im Wesentlichen rechteckige Abdeckung (10) mit zwei zueinander entgegengesetzt liegenden Längsrändern und zwei zueinander entgegengesetzt liegenden Querrändern, wobei jeder Längsrand mit einem Wulst (12) versehen ist, der sich entlang des Randes erstreckt,
(b) eine Trommel (2), die drehbar montiert und geeignet ist, die Abdeckung (10) ab- oder aufzuwickeln, wobei die Trommel (2) auf einem Mechanismus zur Längstranslation montiert ist, umfassend Schienen (6), die beiderseits der Oberfläche (3) angeordnet und jeweils von einem Profil gebildet sind, das eine Öffnung (14) auf einer seiner Seiten hat, die zu der abzudeckenden Oberfläche entgegengesetzt ausgerichtet ist, wobei die Seite mindestens einen Flügel (6a) umfasst, der auf der Seite an die abzudeckende Oberfläche angrenzend angeordnet ist und teilweise die Öffnung (14) verschließt;
(c) ein System zur Befestigung der Abdeckung (10) an einem Querende der Oberfläche (3) so dass die Translation und die Drehung der Trommel (2) zum Abwickeln/Aufwickeln der Abdeckung (10) über der abzudeckenden Oberfläche (3) führen;
(d) ein System zur durchgehenden Verriegelung des Wulstes (12) der Längsränder der Abdeckung (10) in der Öffnung (14) der Schienen (6), das es dem Wulst (12) ermöglicht, sich unter dem Flügel (6a) im Zuge des Abwickelns der Abdeckung (10) einzuhaken und im Zuge ihres Wiederaufwickelns auszuhaken,
**dadurch gekennzeichnet, dass** der Wulst von einem Kern (12c) von im Wesentlichen prismenförmiger, vorzugsweise im Wesentlichen zylindrischer Geometrie, gebildet ist, die in einer röhrenförmigen Hülse (12t) enthalten ist, die auf ihrer gesamten Länge mit einem Band (12b) versehen ist, das an mindestens einer Seite der Abdeckung befestigt ist, und dass der Kern (12c) des Wulstes an der röhrenförmigen Hülse (12t) befestigt ist, um ihn daran zu hindern, entlang der Hülse zu gleiten, wobei eine ausreichende Biegsamkeit des Wulstes für die Vorgänge des Abwickelns/Aufwickelns der Abdeckung (10) über der abzudeckenden Oberfläche (3) beibehalten wird.

2. Vorrichtung nach Anspruch 1, bei der der Kern (12c) gebildet ist
(a) aus einem Geflecht von synthetischen oder natürlichen Fasern, wie Fasern aus Polyolefin, Polyester, Polyamid, Polyaramidbaumwolle, Leinen, Hanf, Jute, Ramie, Sisal, Bast, oder
(b) aus einem Profil aus flexiblem Material, wie einem Elastomer, wie beispielsweise einem natürlichen oder synthetischen Kautschuk (Polyisopren), Polybutadien, PVC oder Styrol-Butadien-Copolymer.

3. Vorrichtung nach Anspruch 1 oder 2, bei der die röhrenförmige Hülse (12t) und das Band (12b) aus einer Folie aus Polymermaterial oder aus einem vorzugsweise gewebten oder geflochtenen Gewebe aus synthetischen oder natürlichen Fasern, wie Fasern aus Polyolefin, Polyester, Polyamid, Polyaramid, PVC, Baumwolle, Leinen, Hanf, Jute, Ramie, Sisal, Bast, gebildet sind, und bei der das Band (12b) und die röhrenförmige Hülse (12t) vorzugsweise zur Gänze miteinander verwebt oder verflochten sind.

4. Abdeckvorrichtung nach einem der vorhergehenden Ansprüche, bei der der Kern (12c) an der röhrenförmigen Hülse (12t) befestigt ist durch:
(a) mindestens eine Naht (12s) entlang des Wulstes, die durch den Kern hindurchgeht,
(b) ein punktuelles Kleben (12g) entlang des Wulstes, oder
(c) ein punktuelles Schweißen (12w) entlang des Wulstes, beispielsweise durch Ultraschall oder lokales Aufbringen einer Wärmequelle.

5. Abdeckvorrichtung nach einem der vorhergehenden Ansprüche, bei der das Band (12b) auf mindestens einer Seite der Abdeckung (10) befestigt ist durch:
(a) mindestens eine Naht (12f) entlang eines Längsrandes der Abdeckung,
(b) ein punktuelles oder durchgehendes Kleben entlang mindestens einer Seite der Abdeckung, oder
(c) ein punktuelles oder durchgehendes Schweißen entlang mindestens einer Seite der Abdeckung, beispielswiese durch Ultraschall oder lokales Aufbringen einer Wärmequelle.

6. Abdeckvorrichtung nach einem der vorhergehenden Ansprüche, bei der der Längstranslationsmechanismus einen Wagen (21), der auf den Schienen (6) montiert ist, umfasst.

7. Abdeckvorrichtung nach dem vorhergehenden Anspruch, bei dem die Eingriffsmittel (15) des Systems zur durchgehenden Verriegelung Mittel zum Anlegen einer Zugspannung in Querrichtung an die Abdeckung (10) bei ihrem Abwickeln umfassen, wobei die Spannung beim Verriegeln der Abdeckung (10) in mindestens einer der Schienen (6) aufrechterhalten wird.

8. Abdeckvorrichtung nach dem vorhergehenden Anspruch, bei der die Mittel zum Anlegen einer Querspannung ein im Wesentlichen zylindrisches Umlenklager (13) umfassen, das drehbar entlang einer Achse parallel zur Querrichtung der Abdeckung montiert ist, wobei das Umlenklager ein distales Ende (13d), das von der abzudeckenden Oberfläche entfernt ist, und ein proximales Ende (13p) hat, das an die Oberfläche angrenzt, wobei die Abdeckung teilweise das Lager (13) umhüllt, um die Richtung zu wechseln, so dass der Wulst (12) über das distale Ende (13d) des Lagers hinausgeht.

9. Abdeckvorrichtung nach dem vorhergehenden Anspruch, bei dem die Mittel zum Anlegen einer Querspannung zusätzlich zwei Spannlager (15a, 15b) umfassen, die zwischen der Trommel und dem Umlenklager (13) angeordnet sind, wobei die beiden Spannlager um einen Abstand größer oder gleich der Dicke der Abdeckung und kleiner als die Dicke des Wulstes (12) getrennt sind, um eine Querspannung an die Abdeckung anzulegen und den Wulst (12) über das distale Ende (13d) des Umlenklagers (13) hinaus zu führen.

10. Abdeckvorrichtung nach einem der Ansprüche 7 bis 10, bei der der Wagen (21), der quer über die abzudeckende Oberfläche (3) hinausragt und die Trommel (2) trägt, jeweils an jedem seiner Enden umfasst:
(a) ein Antriebsrad (9), dessen Drehachse zu jener der Trommel (2) parallel ist;
(b) mindestens zwei Rollen (33), die auf den Schienen (6) liegen und die Längstranslation des Wagens (21) ermöglichen und beiderseits des Antriebsrades (9) montiert sind und mit diesem ein Dreieck bilden, dessen Antriebsrad (9) die obere Spitze bildet, und bei der
der Translationsmechanismus zwei flexible Kränze (31) umfasst, die nur an jedem ihrer Enden (35) an den vier Ecken der abzudeckenden Oberfläche befestigt sind, wobei jeder der Kränze (31):
(c) in der Öffnung (14) der Schienen (6) in den seitlichen Abschnitten (31a) angeordnet ist, die zwischen einem Befestigungspunkt (35) und der nächsten Rolle (33) zum Befestigungspunkt enthalten sind, und
(d) ohne Gleiten an das Antriebsrad (9) im zentralen Abschnitt (31b) zwischen den beiden Rollen (33) anschließt.

11. Abdeckvorrichtung nach dem vorhergehenden Anspruch, bei dem:
(a) beim Abwickeln der Abdeckung (= Ausfahren der Abdeckung) der Wulst (12) jedes Längsrandes der Abdeckung in die Öffnung (14) der entsprechenden Schiene (6) im Zuge dessen, dass sich der Wagen vorwärtsbewegt, eingesetzt und hier durch das Einsetzen unmittelbar danach in dieselbe Öffnung des seitlichen Riemenabschnitts (31a), der direkt an die Rolle (33) stromabwärts zur Translationsrichtung des Wagens angrenzt, festgestellt wird, und
(b) beim Wiederaufwickeln der Abdeckung (= Einziehen der Abdeckung) der zentrale Riemenabschnitt (31b), der direkt an die Rolle (33) stromaufwärts zur Translationsrichtung des Wagens angrenzt, aus der Öffnung (14) der Schiene herausgezogen wird, wodurch es dem Wulst (12) möglich ist, aus der Schiene auszutreten und das Wiederaufwickeln der Abdeckung auf die Trommel (2) des Wagens zu ermöglichen.

12. Vorrichtung nach Anspruch 10 oder 11, umfassend Mittel zur Änderung der relativen Drehgeschwindigkeit zwischen der Aufwickel-/Abwickeltrommel der Abdeckung und der Drehachse der Antriebsräder (9), wobei die Mittel eine Spiralfeder einschließen, die im Inneren der Trommel angeordnet ist und es ermöglicht, die Differenz zwischen der Drehgeschwindigkeit der Antriebsräder, die im Wesentlichen konstant bleiben muss, und der Drehgeschwindigkeit der Trommel, die mit dem Außendurchmesser der Trommel im Zuge dessen, dass die Abdeckung aufgewickelt/abgewickelt wird, variiert, auszugleichen.

13. Vorrichtung nach einem der vorhergehenden Ansprüche, bei der die abzudeckende Oberfläche (3) ausgewählt ist unter:
(a) einem Becken, das mit einer Flüssigkeit gefüllt ist oder nicht, wie einem Schwimmbecken, einem Retentionsbecken, einem Becken zur Behandlung oder Entsalzung von Wasser;
(b) einem Sportplatz, wie einem Tennis- oder Kricketplatz;
(c) einer Fahrzeugkarosserie,
(d) einer Glasoberfläche, wie einem Gewächshaus, einem Wintergarten oder einem Fahrzeugfenster.

## Claims

1. Device (1) for covering a surface (3) comprising:
(a) A substantially rectangular cover (10) having two longitudinal edges opposite one another and two transverse edges opposite one another, each longitudinal edge being provided with a bead (12) extending along said edge,
(b) a rotationally mounted drum (2) suitable for winding or unwinding the cover (10), said drum (2) being mounted on a longitudinal translation mechanism comprising rails (6) placed on either side of said surface (3) and each consisting of a profile having an opening (14) on one of its faces and oriented away from the surface to be covered, said face comprising at least one wing (6a) situated on the side adjacent to the surface to be covered and partially closing said opening (14);
(c) a system for fixing said cover (10) at a transverse end of the surface (3) such that the translation and the rotation of the drum (2) result in the unwinding/winding of the cover (10) over the surface to be covered (3);
(d) a continuous system for locking the bead (12) of the longitudinal edges of the cover (10) in the opening (14) of said rails (6) enabling the bead (12) to be engaged under the wing (6a) as the cover (10) is unwound and to be disengaged as it is rewound,
**characterized in that** said bead is formed by a core (12c) of substantially prismatic geometry, preferably substantially cylindrical, contained in a tubular sheath (12t) provided over its entire length with a strip (12b) fixed to at least one face of the cover, and the core (12c) of the bead is fixed to the tubular sheath (12t) so as to prevent it from slipping along the sheath, while maintaining a flexibility of the bead that is sufficient for the operations of unwinding/winding the cover (10) over the surface to be covered (3).

2. Device according to Claim 1, in which the core (12c) is formed
(a) by a braid of synthetic or natural fibers, such as fibers of polyolefin, polyester, polyamide, polyaramide cotton, linen, hemp, jute, ramie, sisal, raffia, or
(b) by a profile of flexible material, such as an elastomer, such as, for example, a natural or synthetic (polyisoprene) rubber, polybutadiene, PVC, or copolymer styrene butadiene.

3. Device according to Claim 1 or 2, in which the tubular sheath (12t) and the strip (12b) are formed by a film of polymeric material or by a fabric, preferably woven or braided, of synthetic or natural fibers, such as fibers of polyolefin, polyester, polyamide, polyaramide, PVC, cotton, linen, hemp, jute, ramie, sisal, raffia and in which the strip (12b) and the tubular sheath (12t) are preferably woven or braided integrally with one another.

4. Cover device according to any one of the preceding claims, in which the core (12c) is fixed to the tubular sheath (12t) by:
(a) At least one stitching (12s) along the bead and passing right through the core,
(b) a spot gluing (12g) along the bead, or
(c) a spot welding (12w) along the bead, for example by ultrasound, or by localized application of a heat source.

5. Cover device according to any one of the preceding claims, in which the strip (12b) is fixed to at least one face of the cover (10) by:
(a) At least one stitching (12f) along a longitudinal edge of the cover,
(b) a spot or continuous gluing along at least one face of the cover, or
(c) a spot or continuous welding along at least one face of the cover, for example by ultrasound, or by localized application of a heat source.

6. Cover device according to any one of the preceding claims, in which said longitudinal translation mechanism comprises a carriage (21) mounted on the rails (6).

7. Cover device according to the preceding claim, in which said engagement means (15) of the continuous locking system comprise means for applying a stress to the cover (10) by pulling in the transverse direction upon its unwinding, said stress being maintained upon the locking of the cover (10) in the at least one of said rails (6).

8. Cover device according to the preceding claim, in which the means for applying a transverse stress comprise a substantially cylindrical return bearing (13) rotationally mounted on an axis parallel to the transverse direction of the cover, said return bearing having a distal end (13d), away from the surface to be covered, and a proximal end (13p), adjacent to said surface, the cover partially enveloping said bearing (13) in order to change orientation, such that the bead (12) extends beyond the distal end (13d) of the bearing.

9. Cover device according to the preceding claim, in which the means for applying a transverse stress additionally comprise two tensor bearings (15a, 15b) positioned between the drum and the return bearing (13), the two tensor bearings being separated by a distance greater than or equal to the thickness of the cover and less than the thickness of the bead (12), in order to apply a transverse tension to the cover and guide the bead (12) beyond the distal end (13d) of the return bearing (13).

10. Cover device according to any one of Claims 7 to 10, in which said carriage (21) transversely overhanging the surface (3) to be covered and supporting the drum (2) comprises, at each of its ends:
(a) a driving wheel (9) of which the axis of rotation is parallel to that of said drum (2);
(b) at least two casters (33) resting on the rails (6) and allowing the longitudinal translation of the carriage (21), and being mounted on either side of the driving wheel (9), and forming with the latter a triangle of which the driving wheel (9) forms the top vertex; and in which
the translation mechanism comprises two flexible belts (31) fixed only at each of their ends (35) to the four corners of the surface to be covered, each of the two belts (31):
(c) being arranged in the opening (14) of the rails (6) in the lateral sections (31a) contained between a fixing point (35) and the caster (33) closest to said fixing point, and
(d) capping, without slip, the driving wheel (9) in the central section (31b) contained between the two casters (33).

11. Cover device according to the preceding claim, in which:
(a) upon the unwinding of the cover (= deployment of the cover), the bead (12) of each longitudinal edge of the cover is inserted into the opening (14) of the corresponding rail (6) as the carriage advances and is blocked therein by the insertion, immediately after, into the same opening of the lateral section (31a) of the belt directly adjacent to the caster (33) downstream of the direction of translation of the carriage, and
(b) upon the rewinding of the cover (= removal of the cover), the central section (31b) of the belt directly adjacent to the caster (33) upstream of the direction of translation of the carriage is removed from said opening (14) of the rail, thus allowing the bead (12) to be disengaged from the rail and making it possible to rewind the cover onto the drum (2) of the carriage.

12. Device according to Claim 10 or 11, comprising means for modifying the relative speed of rotation between the cover winding/unwinding drum and the axis of rotation of the driving wheels (9), said means including a spiral-wound spring placed inside the drum and that makes it possible to neutralize the difference between the speed of rotation of the driving wheels, which must remain substantially constant, and the speed of rotation of the drum, which varies with the outer diameter of the drum as the cover is wound/unwound.

13. Device according to any one of the preceding claims, in which the surface to be covered (3) is selected from:
(a) a pond, filled or not with a liquid, such as a swimming pool, a water retaining, treatment or desalination pond;
(b) a sports field, such as a tennis court or a cricket field;
(c) a vehicle body,
(d) a glazed surface such as a greenhouse, a winter garden or a vehicle window.
